Europäisches Patentamt

European Patent Office

Office européen des brevets

(11) Veröffentlichungsnummer: **0 404 989 A1**

# (12) EUROPÄISCHE PATENTANMELDUNG

(21) Anmeldenummer: 89111917.4

(22) Anmeldetag: 30.06.89

(51) Int. Cl.5: **B60R 22/46**

(43) Veröffentlichungstag der Anmeldung:
**02.01.91 Patentblatt 91/01**

(84) Benannte Vertragsstaaten:
**AT BE DE ES FR GB IT NL SE**

(71) Anmelder: **TRW REPA GMBH**
**Industriestrasse 20**
**D-7077 Alfdorf(DE)**

(72) Erfinder: **Föhl, Artur**
**Auf der Halde 28**
**D-7060 Schorndorf(DE)**

(74) Vertreter: **Degwert, Hartmut, Dipl.-Phys. et al**
**Patent Attorneys Prinz, Leiser, Bunke &**
**Partner Manzingerweg 7g 7**
**D-8000 München 60(DE)**

(54) Gurtstraffer für Sicherheitsgurtsysteme in Fahrzeugen.

(57) An einer vorzugsweise am Fahrzeugsitz zu befestigenden Grundplatte (10) ist ein Rückzugelement in Form eines schwenkbar gelagerten Hebels oder eines linear verschiebbaren Schiebers gelagert. Der Hebel (12) oder Schieber wird durch eine starke Spiralfeder 20 belastet, durch eine Sperrvorrichtung jedoch in einer stabilen Ruhestellung gehalten. Die Sperrvorrichtung besteht aus zwei funktionell in Reihe liegenden Systemen von Wälzkörpern. Das erste System von Wälzkörpern besteht aus zwei äußeren Rollen (30, 32) und einer inneren, losen Rolle (34), die sich auf einer Rolle (36) des zweiten Systems abstützt. Das zweite System besteht aus zwei äußeren Rollen (38, 34) und einer inneren Rolle (36), die sich in einer Übertotpunktlage befindet und an dem einen Arm eines zweiarmigen Hebels (40) gelagert ist, an dessen anderem Arm eine fahrzeugsensitive Trägheitsmase (44) befestigt ist. Mittels dieser Sperrvorrichtung kann eine Auslöseschwelle präzise und reproduzierbar definiert werden.

Fig. 1

EP 0 404 989 A1

## GURTSTRAFFER FÜR SICHERHEITSGURTSYSTEME IN FAHRZEUGEN

Die Erfindung betrifft einen Gurtstraffer für Sicherheitsgurtsysteme in Fahrzeugen, mit einer am Fahrzeugaufbau oder an einem Fahrzeugsitz befestigten Grundplatte und einem an dieser beweglich geführten Rückzugelement, an dem ein Befestigungsbeschlag für den Sicherheitsgurt angeschlossen ist, mit einem an dem Rückzugelement angreifenden und dieses in Rückstrammrichtung beaufschlagenden Kraftspeicher und einer fahrzeugsensitiv auslösenden Sperrvorrichtung, die im Sperrzustand das Rückzugelement entgegen der Vorspannkraft des Kraftspeichers in einer Ruhestellung hält.

Gurtstraffer für Sicherheitsgurtsysteme sind im allgemeinen mit einem pyrotechnischen Rückstrammantrieb ausgestattet. Derartige Gurtstraffer haben sich in der Praxis sehr bewährt; sie sind jedoch aufwendig und kommen daher in begrenztem Umfang zum Einsatz.

Es besteht ein Bedarf für einfache und kostengünstig herstellbare Gurtstraffer für Sicherheitsgurtsysteme, die zuverlässig arbeiten und wegen der geringen Herstellungskosten eine weite Verbreitung finden können.

Es kommt in Betracht, die für die Rückstrammung erforderliche Antriebskraft von einer gespannten Feder abzuleiten, die durch einen fahrzeugsensitiven Auslösemechanismus plötzlich entspannt wird. Da für eine wirksame Straffung des Gurtsystems aber hohe Antriebskräfte benötigt werden, um innerhalb von wenigen Millisekunden die Straffung durchzuführen, müßten sehr harte Federn verwendet werden.

Es ist bisher nicht gelungen, für eine entsprechend hart dimensionierte Feder einen Auslösemechanismus bereitzustellen, der bei einer vorgegebenen Fahrzeugverzögerung auch nach Jahren der Bereitschaft sicher auslöst und die Federkraft schlagartig freisetzt, ähnlich einfach und kostengünstig hergestellt werden kann wie der Gurtstraffer selbst und zugleich eine hohe Sicherheit gegen Fehlauslösung durch Stöße, Erschütterungen und dergleichen bietet.

Der Erfindung liegt die Aufgabe zugrunde, einen Gurtstraffer für Sicherheitsgurtsysteme anzugeben, der konstruktiv einfach ist und kostengünstig hergestellt werden kann, dennoch aber hohe Ansprüche an die Funktionszuverlässigkeit und Sicherheit gegen Fehlauslösung erfüllt.

Diese Aufgabe wird bei einem Gurtstraffer der eingangs angegebenen Art erfindungsgemäß dadurch gelöst, daß die Sperrvorrichtung im Sperrzustand zwei funktionell in Reihe liegende Systeme aus je drei Wälzkörpern aufweist, die sich mit ihrem Außenumfang aneinander abstützen, daß jedes System zwei äußere Wälzkörper, von denen einer an der Grundplatte gelagert ist, und einen inneren, beweglichen Wälzkörper aufweist, dessen Achse neben einer die Achsen der äußeren Wälzkörper verbindenden Linie angeordnet ist, daß der innere Wälzkörper des ersten Systems in der Bewegungsbahn des Rückzugelements dieses in seiner Ruhestellung arretierend gehalten wird und daß der innere Wälzkörper des zweiten Systems an dem ersten Arm eines zweiarmigen Hebels gelagert ist, der seinerseits an der Grundplatte schwenkbar gelagert ist und an dessen zweiten Hebelarm ein fahrzeugsensitiver Massekörper angreift. Bei dem erfindungsgemäßen Gurtstraffer wirkt jedes System aus drei Wälzkörpern prinzipiell ähnlich wie ein Kniehebelmechanismus. Der innere Wälzkörper des ersten Systems ist bestrebt, zwischen den äußeren Wälzkörpern auszuweichen, wird aber durch den inneren Wälzkörper des zweiten Systems in seiner Lage gehalten, in welcher er an dem Rückzugelement angreift und dieses entgegen der Kraft des Kraftspeichers in seiner Ruhestellung hält. Um den inneren Wälzkörper des zweiten Systems aus der stabilen Übertotpunktlage in eine labile Freigabestellung zu bewegen, muß eine Kraft aufgewendet werden, deren Größe vom Abstand der Achse des inneren Wälzkörpers zu der durch die Achsen der beiden äußeren Wälzkörper jedes Systems verlaufenden Linie abhängt und genau berechnet werden kann. Durch die funktionelle Reihenschaltung von zwei derartigen Systemen wird erreicht, daß die fahrzeugsensitive Auslösung mittels einer relativ kleinen Trägheitsmasse von nur einigen Gramm erreicht werden kann. Die beiden Wälzkörpersysteme weisen überdies den großen Vorteil auf, daß sie dem Gurtstraffer eine genau definierte Auslöseschwelle verleihen, die weitgehend frei von äußeren Einflüssen sowie Herstellungs-, Montage- und Materialtoleranzen ist. Der zur Verwirklichung des erfindungsgemäßen Gurtstraffers erforderliche Aufwand ist dennoch gering, so daß eine rationelle Großserienfertigung möglich ist.

Um Reibungseinflüsse zu vermindern, können die Wälzkörper leichtgängig drehbar gelagert sein, insbesondere mittels Nadellagern oder dergleichen. Es wurde aber überraschenderweise gefunden, daß auch eine einfache Lagerung auf einem Stift zu einer gut reproduzierbaren Auslöseschwelle führt.

In dem ersten System von Wälzkörpern kann der eine äußere Wälzkörper durch den inneren Wälzkörper des zweiten Systems gebildet sein; beide Systeme haben dann einen Wälzkörper gemeinsam. Diese Ausführungsform stellt wegen der Verringerung der Anzahl von benötigten Wälzkörpern eine Vereinfachung dar. Der innere Wälzkörper des ersten Systems ist im Sperrzustand im Bewegungsweg des Rückzugelements angeordnet. Um eine stabile Ruhestellung zu gewährleisten, ist bei solchen Ausführungsformen das Rückzugelement mit einer Ausnehmung versehen, an deren Berandung der Außenumfang des inneren Wälzkörpers des ersten Systems anliegt.

Grundsätzlich sind zwei Ausführungen möglich: Bei einer ersten Ausführungsform bildet das Rückzugelement einen an der Grundplatte schwenkbar gelagerten zweiarmigen Hebel; bei der zweiten Ausführungsform bildet das Rückzugelement einen Schieber, der linear gleitverschiebbar an der Grundplatte geführt ist, die dann zweckmäßig aus zwei beabstandeten Platten gebildet wird, zwischen denen der Schieber aufgenommen ist.

Bei der Ausführungsform mit linear verschiebbarem Schieber ist vorzugsweise eine Rücklaufsperre in Form eines Keiles mit Sperrverzahnung oder eines Klemmkörpers vorgesehen. Der Keil oder Klemmkörper stützt sich auf einer Rampenfläche ab, die gegenüber der Bewegungsrichtung des Schiebers geneigt verläuft und zwischen den beiden Platten begrenzt ist, so daß der Keil oder Klemmkörper zwischen den beiden Platten geführt ist.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:

Fig. 1 eine schematische Seitenansicht einer ersten Ausführungsform des Gurtstraffers im Ruhezustand;

Fig. 2 den Gurtstraffer nach Figur 1 im ausgelösten Zustand;

Fig. 3 eine Perspektivansicht derselben Ausführungsform im Ruhezustand;

Fig. 4 eine schematische Schnittansicht einer zweiten Ausführungsform des Gurtstraffers im Ruhezustand;

Fig. 5 eine entsprechende Ansicht dieser Ausführungsform im Auslösezustand;

Fig. 6 eine schematische Gesamtansicht des Gurtstraffers nach den Figuren 4 und 5;

Fig. 7 eine auseinandergezogene Perspektivdarstellung des Gurtstraffers nach den Figuren 4 bis 6;

Fig. 8 eine Ausführungsvariante des Gurtstraffers nach den Figuren 4 bis 7; und

Fig. 9 eine Teilansicht einer Ausführungsvariante des Gurtstraffers nach den Figuren 1 bis 3.

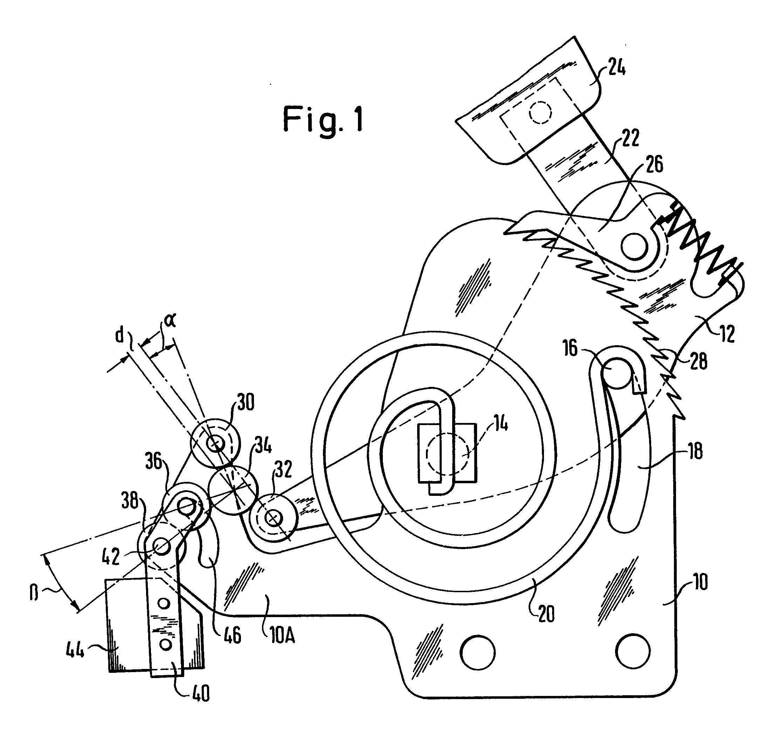

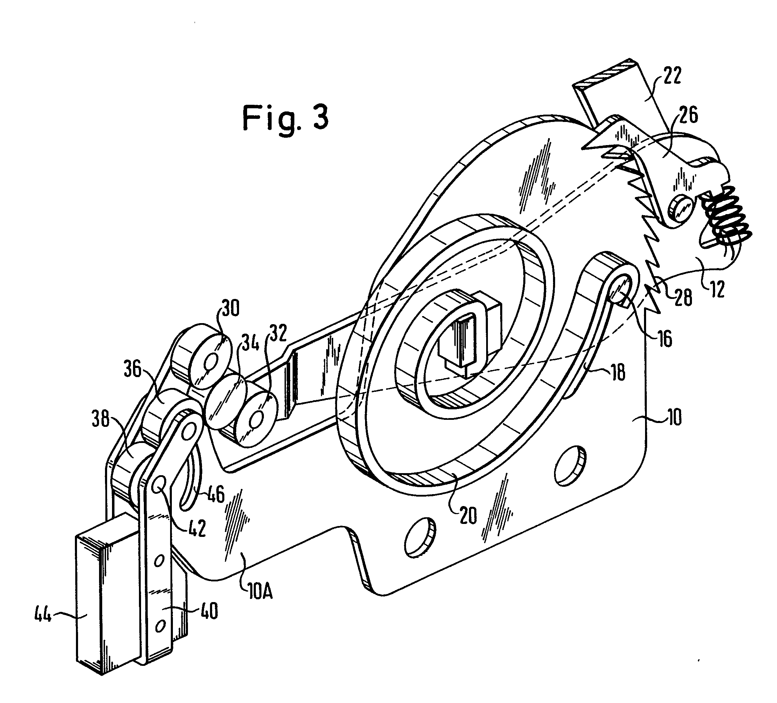

Bei der Ausführungsform nach den Figuren 1 bis 3 ist eine lasttragend dimensionierte Grundplatte 10 zur Befestigung an einem Fahrzeugsitz oder am Fahrzeugaufbau bestimmt. In der Grundplatte 10 ist ein zweiarmiger Hebel 12 um eine Achse 14 verschwenkbar gelagert. An dem zweiarmigen Hebel 12 ist seitlich ein Zapfen 16 befestigt, der ein bogenförmig gekrümmtes Langloch 18 der Grundplatte 10 durchgreift und an dem das äußere Ende einer Spiralfeder 20 eingehängt ist, deren inneres Ende mittels eines geschlitzten Vierkants an der Grundplatte festgelegt ist. An dem einen Arm des zweiarmigen Hebels 12 ist ein Befestigungsbeschlag 22 für ein Gurtschloß 24 angelenkt. An demselben Hebelarm des zweiarmigen Hebels 12 ist ferner eine federbelastete Klinke 26 schwenkbar gelagert, die mit einer Verzahnung 28 der Grundplatte 10 als Rücklaufsperre zusammenwirkt.

Die Grundplatte 10 ist mit einem Ausleger 10A versehen, an dem eine Sperrvorrichtung angeordnet ist, welche an dem benachbar ten Ende des zweiten Hebelarms des zweiarmigen Hebels 12 angreift, um diesen entgegen der Kraft der Spiralfeder 20 in seiner Ruhestellung zu halten. Diese Sperrvorrichtung besteht aus zwei funktionell in Reihe liegenden Systemen von jeweils drei Wälzkörpern. Das erste System besteht aus einer an dem Ausleger 10A drehbar gelagerten äußeren Rolle 30, einer am Ende des zweiten Hebelarms des zweiarmigen Hebels 12 drehbar gelagerten, zylindrischen äußeren Rolle 32 sowie einer inneren Rolle 34, die lose zwischen den beiden äußeren Rollen 32, 30 gehalten ist. Die innere Rolle 34 stützt sich ferner mit ihrem Außenumfang auf der inneren Rolle 36 eines zweiten Systems von drei Wälzkörpern ab, dessen erster äußerer Wälzkörper durch die innere Rolle 34 des ersten Systems und dessen zweiter äußerer Wälzkörper durch eine zylindrische Rolle 38 gebildet ist, die drehbar am Ausleger 10A gelagert ist. Das zweite System von Wälzkörpern hat somit einen Wälzkörper mit dem ersten System gemeinsam. Der innere Wälzkörper 36 des zweiten Systems ist an dem einen, oberen Ende eines zweiarmigen Hebels 40 drehbar gelagert, der seinerseits um eine Achse 42, die mit der Lagerachse der Rolle 38 übereinstimmt, schwenkbar am Ausleger 10 gelagert ist. Der zweite, untere Hebelarm des zweiarmigen Hebels 40 ist als Bügel ausgebildet, in dem ein fahrzeugsensitiver Massekörper 44 befestigt ist.

Die drei Wälzkörper jedes Systems sind nach Art eines Kniehebelmechanismus angeordnet, wobei der innere Wälzkörper des zweiten Systems sich in einer stabilen Übertotpunktlage befindet. In dem ersten System sind die Rollen 30, 32 und 34 so angeordnet, daß die Achse der inneren, losen Rolle 34 einen Abstand d von einer Linie aufweist, die durch die Achsen der Rollen 30, 32 verläuft. Die relative Lage der inneren, losen Rolle 34 bezüglich der äußeren Rollen 30, 32 kann auch durch einen Winkel gekennzeichnet werden, um den die durch die Achsen der Rollen 30 und 34 verlaufende Linie gegenüber einer Linie, die durch die Achsen der äußeren Rolle 30 und 32 verläuft, geneigt ist.

Das zweite System von Wälzkörpern besteht aus den Rollen 34, 36 und 38. Die innere Rolle 36 befindet sich in einer Übertotpunktlage, die dadurch definiert ist, daß die Achse, auf welcher die Rolle 36

3

drehbar gelagert ist, am oberen Ende eines bogenförmig gekrümmten Langloches 46 in der Grundplatte 10 anstößt. Das Langloch 46 wirkt somit als Anschlag für die Verschwenkung des Hebels 40 entgegen dem Uhrzeigersinn in Figur 1. Die Übertotpunktlage der Rolle 36 ist ferner durch einen Neigungswinkel zwischen den Linien durch die Achsen der Rollen 38 und 34 einerseits sowie 34 und 36 andererseits definiert.

Zur Verdeutlichung sind die Winkel α und β in Figur 1 übertrieben groß dargestellt.

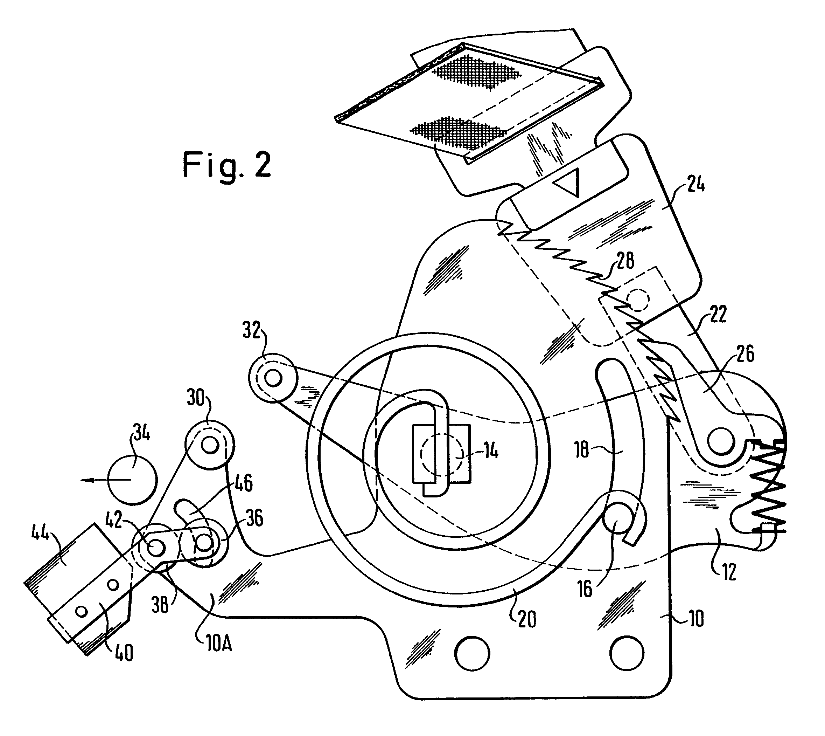

Es wird nun die Arbeitsweise der in Figur 1 gezeigten Vorrichtung beschrieben, wozu auch auf Figur 2 Bezug genommen wird. Die Spiralfeder 20 beaufschlagt den zweiarmigen Hebel 12 im Uhrzeigersinn mit einem hohen Drehmoment, das einer Rückstrammkraft in der Größenordnung von etwa 500 bis 1500 N entspricht, die im Auslösefalle am Befestigungsbeschlag 22 und somit am Gurtschloß 24 angreifen. Der zweiarmige Hebel 12 drückt über die Rolle 32 gegen den Außenumfang der mittleren, losen Rolle 34 des ersten Systems, so daß diese bestrebt ist, sich gegen die innere Rolle 36 des zweiten Systems zu verlagern. Dem widersetzt sich jedoch die Rolle 36, die sich ihrerseits in einer stabilen Übertotpunktlage zwischen den Rollen 34, 38 befindet und nicht ausweichen kann, da ihr Verschwenkungsweg durch das obere Ende des Langlochs 46 begrenzt ist. Die Haltekraft, die erforderlich ist, um ein Ausweichen der inneren Rolle 34 des ersten Systems zu verhindern, beträgt nur einen Bruchteil der Kraft, mit der die Rolle 32 sich auf der Rolle 34 abstützt, da der Winkel α bzw. der Abstand d klein bemessen ist.

Wenn man annimmt, daß die Rolle 32 mit einer Kraft von 1000 N gegen die Rolle 34 gedrückt wird und der Winkel α = 5° ist, so ist bei Vernachlässigung der Rollreibung die benötigte Halte kraft für die Rolle 34 wie folgt zu berechnen:

$F_1 = 2 \cdot 1000 \ N \cdot tg \ α = 175 \ N$.

Diese Haltekraft $F_1$ muß das zweite System von Wälzkörpern aufbringen. Die Masse des fahrzeugsensitiven Massekörpers 44, die benötigt wird, um die erforderliche Haltekraft zu erzeugen, läßt sich wie folgt berechnen:

Es sei a die Länge des oberen Hebelarmes des Hebels 40 zwischen den Achsen der Rollen 36 und 38. Es sei ferner b die Länge des Hebelarmes zwischen dem Schwerpunkt des fahrzeugsensitiven Massekörpers 44 und der Achse 42. Wählt man die Hebelarme a und b etwa gleich groß und einen Winkel β von etwa 2,5° sowie eine Auslöseschwelle von etwa der zehnfachen Erdbeschleunigung für die fahrzeugsensitive Auslösung der Rückstrammung, so ergibt sich:

$F_2 = F_1 \cdot 2 \cdot tg \ β = 100 \ N \cdot tg \ β = 15,3 \ N$

$$m = \frac{15,3 \ N \ s^2}{10 \cdot 9,81 \ Nm} \approx 0,156 \ kg.$$

Der fahrzeugsensitive Massekörper 44 muß somit eine Masse in der Größenordnung von 0,1 bis 0,2 kg aufweisen.

Wenn nun eine Fahrzeugverzögerung von etwa der zehnfachen Erdbeschleunigung oder mehr auftritt, wird die Schwellkraft überwunden, mit der die Rolle 36 in Anlage an dem oberen Ende des Langloches 46 gehalten wird. Der Hebel 40 wird im Uhrzeigersinn verschwenkt, so daß die Rolle 36 sich zwischen den Rollen 38 und 34 bewegt und dabei eine Lage erreicht, in der die von der Rolle 34 auf sie ausgeübte Druckkraft eine Kraftkomponente erzeugt, die einem im Uhrzeigersinn gerichteten Drehmoment am Hebel 40 entspricht. Sobald diese Lage erreicht ist, wird das System unstabil: Je weiter der Hebel 40 im Uhr zeigersinn verschwenkt wird, desto größer wird das seine Schwenkbewegung unterstützende Drehmoment, das durch die Spiralfeder 20 über die Rollen 32 und 34 auf die Rolle 36 übertragen wird. Es kann nun auch die lose innere Rolle 34 des ersten Systems von Wälzkörpern zwischen den beiden äußeren Rollen 30, 32 dieses Systems ausweichen, wobei sich der Winkel α vergrößert. Das System ist nun insgesamt frei. Die lose Rolle 34 wird zwischen den Rollen 30 und 32 herausgeschleudert. Die Rolle 32 trifft nun auf kein Hindernis mehr, so daß der Hebel 12 durch die Spiralfeder 20 im Uhrzeigersinn verschwenkt wird und der Befestigungsbeschlag 22 mit dem Gurtschloß 24 abwärts bewegt wird, bis ein Kräftegleichgewicht mit der Gurtspannung eingetreten ist oder der Zapfen 16 an der unteren Begrenzung des Langlochs 18 anschlägt.

Die beschriebenen Vorgänge laufen innerhalb einer sehr kurzen Zeitspanne von nur wenigen Millisekunden ab. Figur 2 zeigt den Zustand des Gurtstraffers nach vollendeter Rückstraffung. Die lose Rolle 34 wird fortgeschleudert und kann beispielsweise durch eine Verkleidung aufgefangen werden.

Der Weg, den die Rolle 36 zurücklegt, bis sie aus ihrer Übertotpunktlage in eine labile Lage gelangt ist, steht in einer festen Beziehung zu der Beschleunigung und der Zeitspanne bis zur Auslösung. Bei einer Wegstrecke von 1 mm und einer mittleren Fahrzeugverzögerung von der zehnfachen Erdbeschleunigung liegt die Zeitspanne bei etwa 10 ms. Eine wichtige Eigenschaft des Systems besteht darin, daß kurzzeitig einwirkende Beschleunigungen wie etwa aufgrund von Stößen oder Schwingungen nicht zu einer Fehlauslösung führen können, da das Produkt aus mittlerer Beschleunigung und Wirkzeit klein bleibt.

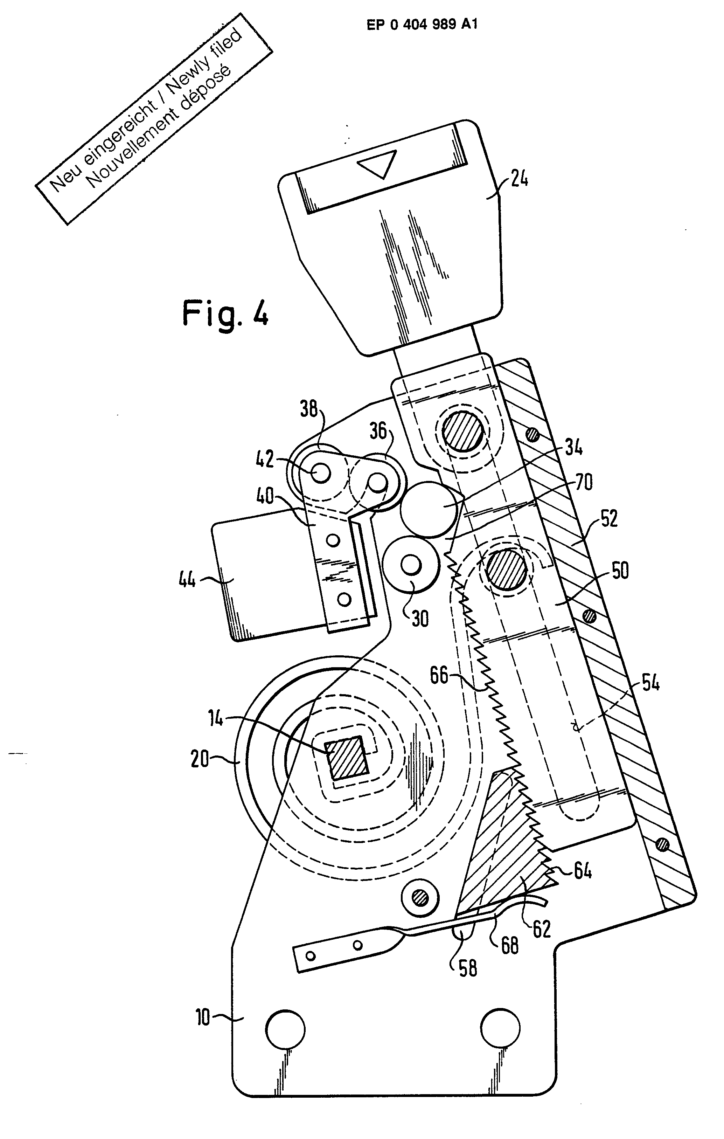

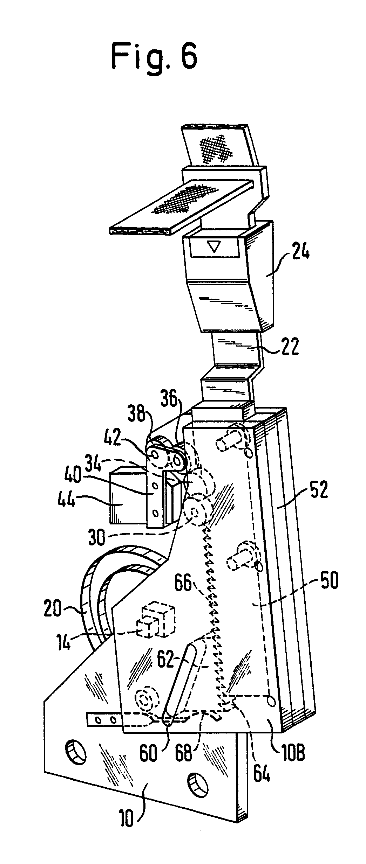

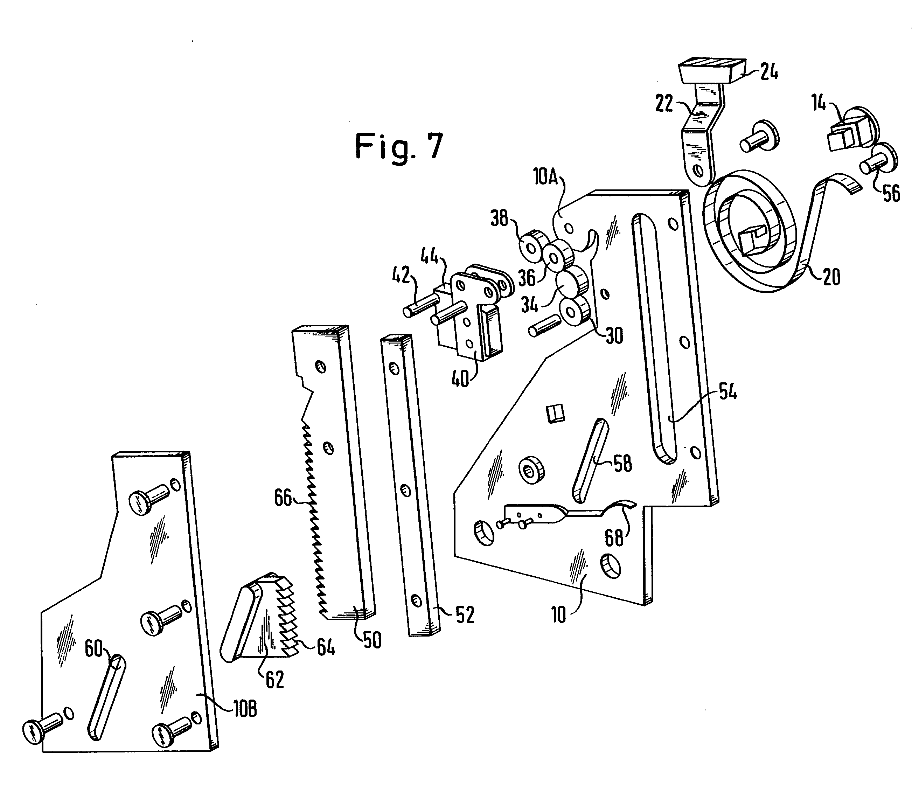

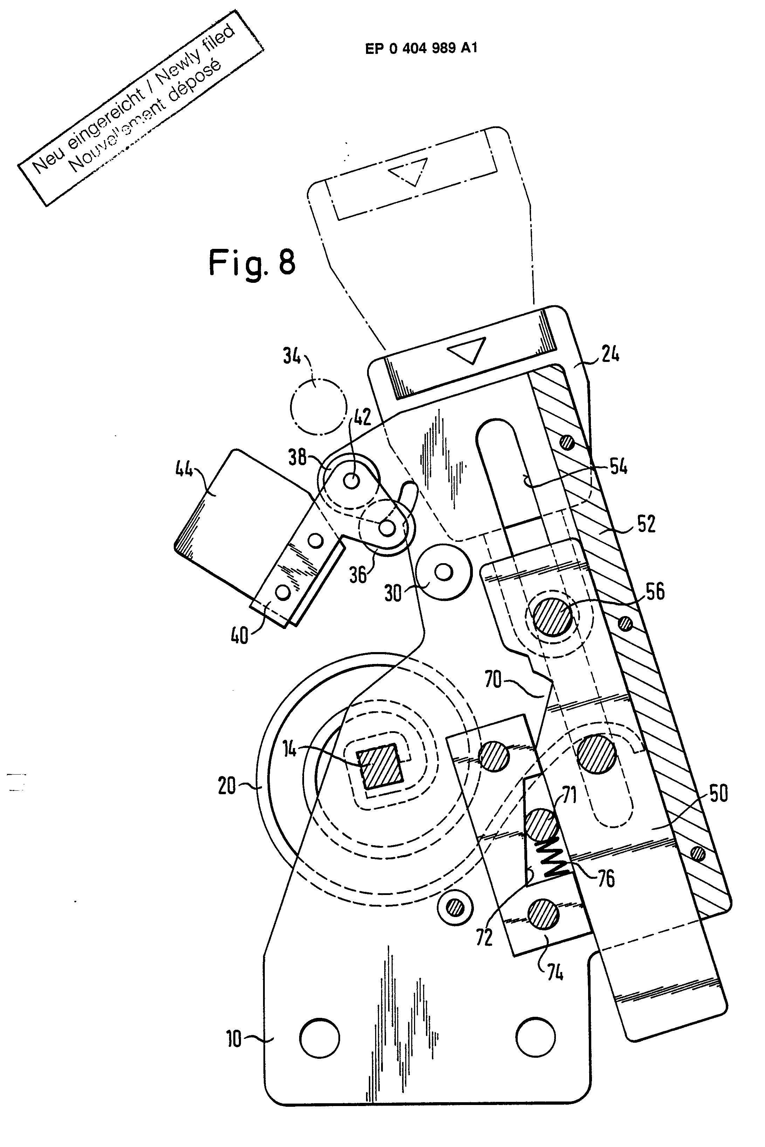

Bei den Ausführungsformen nach den Figuren 4 bis 7 sowie nach Figur 8 ist das Rückzugelement, das an dem Gurtschloß 24 angreift, nicht als zweiarmiger, schwenkbar gelagerter Hebel, sondern als linear verschiebbar geführtes Teil ausgebildet, das im folgenden als "Schieber" bezeichnet wird und in der Zeichnung mit der Bezugszahl 50 versehen ist.

Dieser Schieber 50 ist zwischen der Grundplatte 10 und einer von dieser durch einen Abstandshalter 52 im Abstand gehaltenen Platte 10B geführt. Die Grundplatte 10 weist ein Langloch 54 auf, das ein am Schieber 50 befestigter Zapfen 56 durchgreift. Auf dem Zapfen 56 liegt das äußere Ende der Spiralfeder 20 auf, deren inneres Ende an einem Vierkant 14, der an der Grundplatte 10 befestigt ist, festgelegt ist. Am oberen Ende des Schiebers 50 ist der Befestigungsbeschlag 22 für das Gurtschloß 24 angelenkt. Die Grundplatte 10 und die Platte 10A sind jeweils mit einem Langloch 58 bzw. 60 versehen. Die zueinander parallelen Langlöcher 58, 60 dienen zur Führung eines Arretierkeiles 62, dessen zwei seitlich angesetzte Rippen in den Langlöchern 58, 60 geführt sind. Der Arretierkeil 62 wird durch die Langlöcher 58, 60 schräg zur Bewegungsrichtung des Schiebers 50 geführt und ist auf seiner dem Schieber zugewandten Kante mit einer Rastverzahnung 64 versehen, die mit einer entsprechenden Rastverzahnung 66 des Schiebers 50 zusammenwirkt. Durch eine Blattfeder 68 wird der Arretierkeil 62 gegen den Schieber 50 beaufschlagt. Die Rastverzahnungen 64, 66 sind so geformt, daß sie eine Abwärtsbewegung des Schiebers 50 zulassen, die entgegengesetzt gerichtete Rückbewegung jedoch sperren.

An ihrem oberen Ende besitzt die Grundplatte 10 einen Ausleger 10A, an dem ein zweiarmiger Hebel 40 auf einer Achse 42 gelagert ist, auf der auch eine Rolle 38 drehbar gelagert ist. Wie bei der Ausführungsform nach den Figuren 1 bis 3 ist an dem Hebel 40 ein fahrzeugsensitiver Massekörper 44 befestigt. Ferner ist wie bei der Ausführungsform nach den Figuren 1 bis 3 an dem oberen Hebelarm des Hebels 40 eine bewegliche Rolle 36 drehbar gelagert. An der Grundplatte 10 ist ferner eine Rolle 30 drehbar gelagert, die mit der Rolle 36 und einer losen Rolle 34 ein System aus drei Wälzkörpern bildet. Die lose Rolle 34 stützt sich mit ihrem Außenumfang an der Berandung einer Ausnehmung 70 des Schiebers 50 ab.

Die vier Rollen 30, 34, 36 und 38 bilden zwei Systeme von jeweils drei Wälzkörpern mit zwei äußeren und einem inneren Wälzkörper, der sich bei dem zweiten System in Übertotpunktlage befindet. Die Anordnung entspricht der bei der Ausführungsform nach den Figuren 1 bis 3, jedoch ist die Rolle 32 der zuerst beschriebenen Ausführungsform entfallen, da der Schieber 50 nicht mit einer Abstützrolle, sondern mit der Ausnehmung 70 versehen ist. Das erste System von Wälzkörpern besteht aus den Rollen 30, 34 und 36; das zweite System besteht aus den Rollen 34, 36 und 38. Beide Systeme sind wie bei der Ausführungsform nach den Figuren 1 bis 3 funktionell in Reihe geschaltet und bewirken in prinzipiell gleicher Weise die Definition einer präzise und reproduzierbar bestimmten Auslöseschwelle. Die Masse des Massekörpers 44 liegt in derselben Größenordnung wie bei der zuerst beschriebenen Ausführungsform. Es wird jedoch eine Rolle, nämlich die Rolle 32 der ersten Ausführungsform, eingespart.

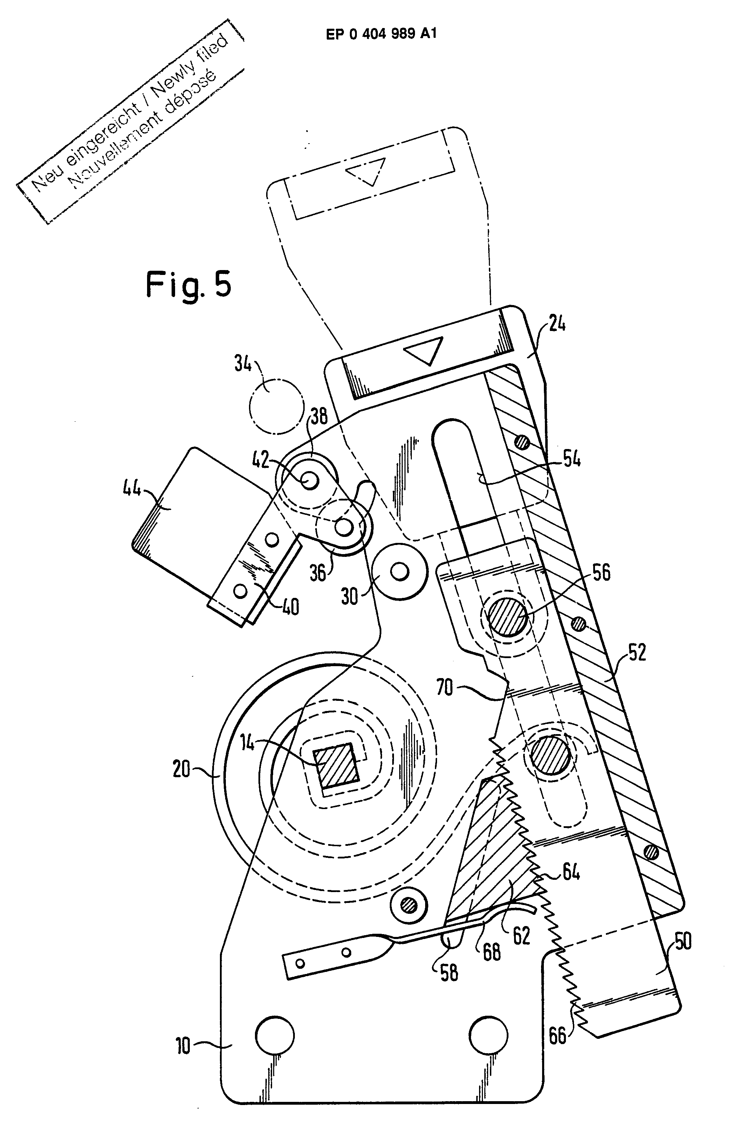

Die Arbeitsweise der durch die zwei Systeme von Wälzkörpern gebildeten Sperrvorrichtung ist prinzipiell dieselbe wie bei der zuerst beschriebenen Ausführungsform und wird daher nicht nochmals erläutert. Figur 4 zeigt den Gurtstraffer in der Ruhestellung; Figur 5 zeigt ihn in der Auslösestellung, in welcher der Schieber 50 durch die Kraft der Spiralfeder 20 abwärts verlagert ist und der Arretierkeil 62 eine Rückbewegung des Schiebers 50 verhindert.

Die in Figur 8 gezeigte Ausführungsform unterscheidet sich von der nach den Figuren 4 bis 7 nur durch die Ausbildung der Rücklaufsperre. Diese ist hier durch einen zylindrischen Wälzkörper 71 aus vorzugsweise gehärtetem Material und einer Rampenfläche 72 an einem zwischen der Grundplatte 10 und der Platte 10B gehaltenen Führungsteil 74 gebildet. Die Rampenfläche 72 ist schräg zur Verschiebungsrichtung des Schiebers 50 geneigt. Der Wälzkörper 71 wird durch eine Druckfeder 76 die Rampenfläche 72 hoch und so gegen die benachbarte Stirnkante des Schiebers 50 vorgespannt. Es ist leicht ersichtlich, daß der Wälzkörper 71 eine Abwärtsbewegung des Schiebers 50 unbehindert zuläßt, die entgegengesetzt gerichtete Rücklaufbewegung jedoch verhindert, wobei unter hoher Last eine gewisse plastische Verformung der benachbarten Stirnfläche des Schiebers 50 eintreten kann und die Rücklaufsicherung so noch erhöht wird.

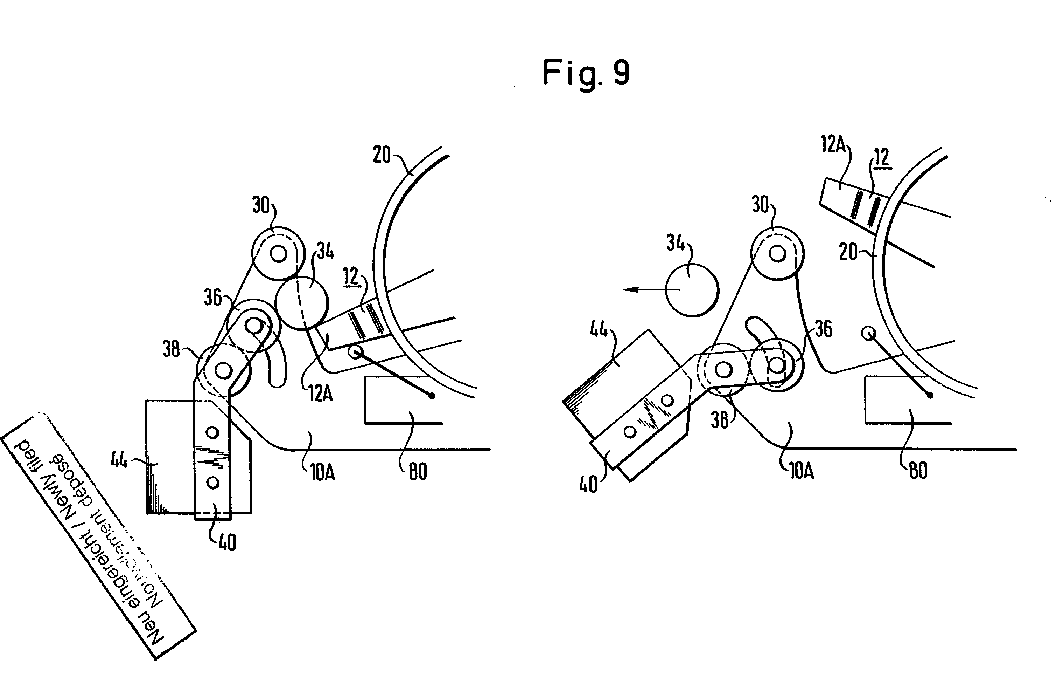

Die in Figur 9 gezeigte Ausführungsform unterscheidet sich von der nach den Figuren 1 bis 3 nur dadurch, daß die Rolle 32 am Ende des zweiarmigen Hebels 12 entfallen ist. Das Ende des Hebels 12 liegt mit einer Kante 12A unmittelbar auf der losen Rolle 34 auf. Bei dieser Ausführungsform ist das erste System von Wälzkörpern durch die Rollen 30, 34 und 36 und das zweite System durch die Rollen 38, 36 und 34 gebildet. Diese Ausführungsform der Sperrvorrichtung ist analog zu der nach den Figuren 4 bis 8. Die zwei Systeme von Wälzkörpern bestehen insgesamt nur aus vier Rollen, von denen zwei beiden Systemen gemeinsam sind. Figur 9 zeigt auf der linken Seite den Ruhezustand und auf der rechten Seite

EP 0 404 989 A1

den Auslösezustand. Die Anordnung ist so getroffen, daß die Kante 12A des Hebels 12 unbehindert an der Rolle 30 vorbei bewegt werden kann, nachdem die lose Rolle 34 fortgeschleudert wurde.

Da die Arbeitsweise prinzipiell mit der bei der Ausführungsform nach den Figuren 1 bis 3 übereinstimmt, wird sie nicht erneut beschrieben.

Bei der in Figur 9 gezeigten Ausführungsform wird die Stellung des Hebels 12 durch einen Fühler abgetastet, der als Mikroschalter 80 mit Ruhekontakt dargestellt ist. Bei unbetätigtem Mikroschalter 80 wird ein Stromkreis geschlossen, der eine Anzeigeeinrichtung wie eine Warnlampe aktiviert, um den Fahrzeugbenutzer darüber zu informieren, daß der Gurtstraffer ausgelöst wurde und somit nicht funktionsbereit ist.

## Ansprüche

1. Gurtstraffer für Sicherheitsgurtsysteme in Fahrzeugen, mit einer am Fahrzeugaufbau oder an einem Fahrzeugsitz befestigten Grundplatte und einem an dieser beweglich geführten Rückzugelement, an dem ein Befestigungsbeschlag für den Sicherheitsgurt angeschlossen ist, mit einem an dem Rückzugelement angreifenden und dieses in Rückstrammrichtung beaufschlagenden Kraftspeicher und einer fahrzeugsensitiv auslösenden Sperrvorrichtung, die im Sperrzustand das Rückzugelement entgegen der Vorspannkraft des Kraftspeichers in einer Ruhestellung hält, **dadurch gekennzeichnet,** daß die Sperrvorrichtung im Sperrzustand zwei funktionell in Reihe liegende Systeme aus je drei Wälzkörpern (30, 32, 34 bzw. 34, 36, 38; 30, 34, 36 bzw. 34, 36, 38) aufweist, die sich mit ihrem Außenumfang aneinander abstützen, daß jedes System zwei äußere Wälzkörper (30, 32 bzw. 34, 38; 30, 36 bzw. 34, 38), von denen einer an der Grundplatte (10) gelagert ist, und einen inneren, beweglichen Wälzkörper (34 bzw. 36) aufweist, dessen Achse neben einer die Achsen der äußeren Wälzkörper verbindenden Linie angeordnet ist, daß der innere Wälzkörper (34) des ersten Systems in der Bewegungsbahn des Rückzugelements (12; 50) dieses in seiner Ruhestellung arretierend gehalten wird und daß der innere Wälzkörper (36) des zweiten Systems an dem ersten Arm eines zweiarmigen Hebels (40) gelagert ist, der seinerseits an der Grundplatte (10) schwenkbar gelagert ist und an dessen zweitem Hebelarm ein fahrzeugsensitiver Massekörper (44) angreift.

2. Gurtstraffer nach Anspruch 1, **dadurch gekennzeichnet,** daß der innere Wälzkörper (34) des ersten Systems lose zwischen den äußeren Wälzkörpern (30, 32; 30, 36) dieses Systems gehalten ist.

3. Gurtstraffer nach Anspruch 1 oder 2, **dadurch gekennzeichnet,** daß der fahrzeugsensitive Massekörper (44) unmittelbar dem Schwenklager des zweiarmigen Hebels (40) benachbart an dessen zweitem Hebelarm befestigt ist.

4. Gurtstraffer nach einem der vorstehenden Ansprüche, **dadurch gekennzeichnet,** daß in der Sperrstellung die durch den Schwerpunkt des Massekörpers (44) und das Schwenklager des zweiarmigen Hebels (40) verlaufende Linie gegenüber der Senkrechten entgegen der normalen Fahrtrichtung um wenige Grad zurückgeneigt ist.

5. Gurtstraffer nach einem der vorstehenden Ansprüche, **dadurch gekennzeichnet,** daß die Lage des inneren Wälzkörpers (36) zwischen den äußeren Wälzkörpern (34, 38) des zweiten Systems in der Sperrstellung durch einen Anschlag (46) definiert ist.

6. Gurtstraffer nach einem der vorstehenden Ansprüche, **dadurch gekennzeichnet,** daß auf der Schwenkachse (42) des zweiarmigen Hebels (40) zugleich einer (38) der äußeren Wälzkörper des zweiten Systems gelagert ist.

7. Gurtstraffer nach einem der vorstehenden Ansprüche, **dadurch gekennzeichnet,** daß der zweiarmige Hebel (40) als Bügel ausgebildet ist, zwischen dessen Schenkeln auf der Seite des zweiten Hebelarms der fahrzeugsensitive Massekörper (44) befestigt ist und auf der Seite des ersten Hebelarms der innere Wälzkörper (36) des zweiten Systems gelagert ist.

8. Gurtstraffer nach einem der vorstehenden Ansprüche, **dadurch gekennzeichnet,** daß das Rückzugelement (12) ein an der Grundplatte schwenkbar gelagerter zweiarmiger Hebel ist, an dessen einem Hebelarm der Befestigungsbeschlag (22) angeschlossen ist und dessen anderer Hebelarm sich auf dem inneren Wälzkörper (34) des ersten Systems abstützt.

9. Gurtstraffer nach Anspruch 8, **dadurch gekennzeichnet,** daß der zweite Hebelarm sich mit einem an ihm gelagerten äußeren Wälzkörper (32) des ersten Systems auf seinem inneren Wälzkörper (34) abstützt.

10. Gurtstraffer nach Anspruch 8, **dadurch gekennzeichnet,** daß der zweite Hebelarm sich mit einer Kante auf dem inneren Wälzkörper (34) des ersten Systems abstützt.

11. Gurtstraffer nach einem der Ansprüche 1 bis 7, **dadurch gekennzeichnet,** daß das Rückzugelement (50) ein an der Grundplatte (10) linear verschiebbar geführtes Teil ist.

12. Gurtstraffer nach Anspruch 11, **dadurch gekennzeichnet,** daß das linear verschiebbar geführte Teil eine Aussparung (70) aufweist, an deren Berandung der Außenumfang des inneren Wälzkörpers (34) des ersten Systems anliegt, und daß einer der äußeren Wälzkörper des ersten Systems durch den inneren Wälzkörper (36) des zweiten Systems gebildet ist.

13. Gurtstraffer nach Anspruch 11 oder 12, **dadurch gekennzeichnet,** daß die Grundplatte aus zwei im Abstand voneinander gehaltenen Platten (10, 10B) gebildet ist, zwischen denen das linear verschiebbar geführte Teil (50) angeordnet ist.

14. Gurtstraffer nach Anspruch 13, **dadurch gekennzeichnet,** daß zwischen den zwei Platten (10, 10B) ein Blockierteil (62; 71) durch eine Rampenfläche (58, 72) schräg zur Verschiebungsrichtung des Rückzugelementes (50) geführt und durch Federkraft zu diesem hin beaufschlagt ist sowie die Bewegung des Rückzugelements (50) aus dessen Ruhestellung in die Rückstrammstellung zuläßt, die Rückbewegung in die Ruhestellung jedoch sperrt.

15. Gurtstraffer nach Anspruch 14, dadurch gekennzeichnet, daß das Blockierteil als Keil (62) ausgebildet ist, der auf seiner den Rückzugelement (50) zugewandten Fläche eine Rastverzahnung (64) trägt, die passend zu einer Gegenverzahnung (66) an dem Rückzugelement (50) ausgebildet ist.

16. Gurtstraffer nach Anspruch 14, dadurch gekennzeichnet, daß das Blockierteil als Klemmkörper (71) ausgebildet ist.

17. Gurtstraffer nach Anspruch 16, **dadurch gekennzeichnet,** daß der Klemmkörper (71) durch einen Wälzkörper aus gehärtetem Metall gebildet ist und die ihm gegenüberliegende Anlagefläche des Rückzugelements (50) unter Last durch den Wälzkörper plastisch verformbar ist.

18. Gurtstraffer nach einem der vorstehenden Ansprüche, dadurch gekennzeichnet, daß wenigstens ein Teil der Wälzkörper auf Nadellagern drehbar gelagert ist.

19. Gurtstraffer nach einem der vorstehenden Ansprüche, **dadurch gekennzeichnet,** daß dem Rückzugelement (12) ein Fühler (80) zugeordnet ist, der seine Stellung abtastet und eine Anzeigeeinrichtung aktiviert, wenn das Rückzugelement (12) seine Ruhestellung verlassen hat.

Fig.1

EP 0 404 989 A1

Fig. 2

EP 0 404 989 A1

Fig. 3

EP 0 404 989 A1

EP 0 404 989 A1

Fig. 4

Neu eingereicht / Newly filed
Nouvellement déposé

**Fig. 5**

# Fig. 6

Fig. 7

Fig. 8

# Fig. 9

EP 0 404 989 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-300469 (BRITAX-KOLB GMBH & CO) <br> * Seite 4, Spalte 6, Zeile 40 - Seite 5, Spalte 8, Zeile 33; Figur 1 * <br> --- | 1, 11 | B60R22/46 |
| A | DE-A-3229304 (REPA FEINSTANZWERK GMBH) <br> * Seite 8, Zeile 10 - Seite 11, Zeile 18; Figuren * <br> --- | 1 | |
| A | EP-A-195268 (AUTOLIV DEVELOPMENT A.B.) <br> * Seite 8, Zeile 14 - Seite 10, Zeile 12; Figuren 4-6 * <br> ----- | 1 | |

**RECHERCHIERTE SACHGEBIETE (Int. Cl.5)**

B60R
G01P

Der vorliegende Recherchenbericht wurde für alle Patentansprüche erstellt

| Recherchenort | Abschlußdatum der Recherche | Prüfer |
|---|---|---|
| DEN HAAG | 06 MAERZ 1990 | DUBOIS B.F.J. |